# EUROPÄISCHE PATENTANMELDUNG

(11) **EP 4 589 157 A1**
(43) Veröffentlichungstag der Anmeldung: **23.07.2025**
(21) Anmeldenummer: 25151795.9
(22) Anmeldetag: 14.01.2025
(51) Int. Cl.: F16B 2/06

(54) **KLEMMHALTER ZUM BEFESTIGEN VON BAUTEILEN AN STRUKTURKOMPONENTEN EINES FAHRZEUGS**

(30) Priorität: 22.01.2024 DE 102024101769
(71) Anmelder: Elbe Flugzeugwerke GmbH, 01109 Dresden (DE)
(72) Erfinder: Grande, Eric, 01109 Dresden (DE); Hübner, Andree, 01109 Dresden (DE)
(74) Vertreter: LKGLOBAL Lorenz & Kopf Patentanwalt Attorney at Law PartG mbB

(57) **Zusammenfassung**

Es wird ein Klemmhalter (10) zum Befestigen von Bauteilen an einer Strukturkomponente (110) eines Fahrzeugs (100) offenbart. Der Klemmhalter (10) umfasst einen ersten Klammerteil (11), einen zweiten Klammerteil (12), und einen Bauteil-Befestigungsabschnitt (13). Eine Innenseite (14) des ersten Klammerteils (11) ist zu einer Form einer ersten Seite (111) der Strukturkomponente (110) korrespondierend ausgestaltet. Eine Innenseite (15) des zweiten Klammerteils (12) ist zu einer Form einer zweiten Seite (112) der Strukturkomponente (110), welche der ersten Seite (111) gegenüber liegt, korrespondierend ausgestaltet ist. Der erste Klammerteil (11) und der zweite Klammerteil (12) sind miteinander verbindbar, so dass der Klemmhalter (10) mit der Innenseite (14) des ersten Klammerteils (11) und mit der Innenseite (15) des zweiten Klammerteils (12) in die Strukturkomponente (110) eingreift, so dass der Klemmhalter (10) die Strukturkomponente (110) zumindest abschnittsweise umgibt, wenn der Klemmhalter (10) an der Strukturkomponenten (110) angebracht ist. Der Bauteil-Befestigungsabschnitt (13) ist an dem ersten Klammerteil (11) vorgesehen und ist ausgestaltet, ein Bauteil an dem Klemmhalter (10) zu befestigen. Ferner wird ein Fahrzeug (100) mit einem entsprechende Klemmhalter (10) offenbart.

## Beschreibung

### TECHNISCHES GEBIET

Die vorliegende Offenbarung bezieht sich auf einen Klemmhalter zum Befestigen von Bauteilen an einer Strukturkomponente eines Fahrzeugs sowie auf ein Fahrzeug mit einem entsprechenden Klemmhalter.

### TECHNISCHER HINTERGRUND

In Flugzeugen werden unzählige kleine Halter zum Anbringen von Bauteilen, insbesondere von Kabel, Leitungen und ähnlichem, im ganzen Flugzeug verteilt an den Strukturkomponenten des Flugzeugs (d.h. an den Stringern und Spanten) angebracht. Diese Halter werden üblicherweise in mühseliger Handarbeit an die entsprechenden Strukturkomponenten genietet. Beispielsweise sind Halter bekannt, die in Form eines Niets durch entsprechende Löcher in den Strukturkomponenten geschoben und dann vernietet werden. An diesen Haltern können dann beispielsweise Kabelbäume, Fluidleitungen, Isolierungen und andere Komponenten befestigt werden.

Zum Anbringen der oben beschriebenen Halter müssen somit Löcher durch die entsprechenden Strukturkomponenten gebohrt werden, welche die strukturelle Integrität der Strukturbauteile und damit der Primärstruktur des Flugzeugs schwächen können. Zudem können die Halterpositionen aufgrund der nötigen Löcher in den Strukturkomponenten beim Montieren nicht variiert werden. Es kann jedoch vorkommen, dass solche Halter beispielsweise bei der Montage von Kabeln aus Platzgründen oder aus anderen Gründen geringfügig anders platziert werden müssen. Bei Niet-Haltern, die in Nietlöchern angebracht werden, ist dann das erneute Bohren von Löchern notwendig, um den Halter an einer anderen Stelle positionieren zu können.

Bekannte Niet-Halter sind somit zum einen sehr zeitaufwändig bei der Montage und können prinzipbedingt die strukturelles Integrität schwächen. Zudem wird aufgrund der langen Montagezeiten die Arbeitssicherheit negativ beeinflusst, da der entsprechende Monteur unter Umstände lange auf Leitern stehen muss und dort komplizierte Arbeitsschritte durchführen muss.

Ein weiteres Problem bei solchen Niet-Haltern liegt darin, dass diese üblicherweise aus metallischen Werkstoffen, wie beispielsweise Titan, gefertigt werden. Aufgrund der Vielzahl an nötigen Haltern führt dies zu einem beträchtlichen Mehrgewicht für das Flugzeug. In der Luftfahrt besteht jedoch allgemein stets das Bestreben, das Gewicht des Flugzeugs zu reduzieren.

### BESCHREIBUNG

Es kann demgemäß als Aufgabe der Erfindung angesehen werden, eine einfach, schnell und flexibel zu montierende Haltevorrichtung zum Befestigen von Bauteilen an Strukturkomponenten von Fahrzeugen zu schaffen, welche gleichzeitig das Gewicht reduziert.

Diese Aufgabe wird durch die Gegenstände der unabhängigen Ansprüche gelöst. Weitere Ausführungsformen ergeben sich aus den abhängigen Ansprüchen sowie aus der nachfolgenden Beschreibung.

Gemäß einem ersten Aspekt wird ein Klemmhalter zum Befestigen von Bauteilen an einer Strukturkomponente eines Fahrzeugs offenbart. Der Klemmhalter umfasst einen ersten Klammerteil, einen zweiten Klammerteil, und einen Bauteil-Befestigungsabschnitt. Eine Innenseite des ersten Klammerteils ist zu einer Form einer ersten Seite der Strukturkomponente korrespondierend ausgestaltet. Eine Innenseite des zweiten Klammerteils ist zu einer Form einer zweiten Seite der Strukturkomponente, welche der ersten Seite gegenüber liegt, korrespondierend ausgestaltet. Der erste Klammerteil und der zweite Klammerteil sind miteinander verbindbar, so dass der Klemmhalter mit der Innenseite des ersten Klammerteils und mit der Innenseite des zweiten Klammerteils in die Strukturkomponente eingreift, so dass der Klemmhalter die Strukturkomponente zumindest abschnittsweise umgibt, wenn der Klemmhalter an der Strukturkomponenten angebracht ist. Der Bauteil-Befestigungsabschnitt ist an dem ersten Klammerteil vorgesehen und ist ausgestaltet, ein Bauteil an dem Klemmhalter zu befestigen.

Die Strukturkomponenten kann beispielsweise ein Stringer oder ein Spant eines Flugzeugs sein. Obwohl der Klemmhalter hierin hauptsächlich in Bezug auf Flugzeuge und dabei hauptsächlich in Bezug auf Stringer beschrieben wird, sollte beachtet werden, dass der Klemmhalter grundsätzlich auch bei jeder anderen Art von Fahrzeug, wie beispielsweise in Zügen, Kraftfahrzeugen, Bussen, Straßenbahnen oder jedem anderen Fahrzeug verwendet werden. Auch ist denkbar, dass der Klemmhalter beispielsweises in Gebäuden verwendet wird.

Zu befestigende Bauteile können insbesondere elektrische Kabel, Rohrleitungen, Schächte, Kanäle oder aber auch jedes andere Bauteil sein.

Der erste Klammerteil und der zweite Klammerteil sind im Wesentlichen Hälften des Klemmhalters, deren Innenseiten zusammen als Negativform der Strukturkomponenten, an welcher der Klemmhalter angebracht werden soll, ausgestaltet sind. Mit anderen ist eine Innenseite einer Hälfte des Klemmhalters, d.h. beispielsweise des ersten Klammerteils, zumindest im Wesentlichen korrespondierend (insbesondere formschlüssig) mit einer Seite der Strukturkomponente ausgeformt. Im Wesentlichen deshalb, weil gemäß gewissen Ausführungsformen beispielsweise zusätzliche Haftbeschichtungen an der Innenseite der Klammerteile vorgesehen sein können und die Innenseite dementsprechend auch etwas größer gefertigt sein kann. Zudem sind selbstverständlich Fertigungstoleranzen zu beachten. Die Innenseite der anderen Hälfte des Klemmhalters, d.h. des zweiten Klammerteils, ist dann in gleicher Weise im Wesentlichen korrespondierend (insbesondere formschlüssig) mit der anderen Seite der Strukturkomponente ausgeformt. Dabei ist zu beachten, dass der Klemmhalter insbesondere an einer Außenkante der Strukturkomponenten angebracht werden kann, so dass das erste Klammerteil und das zweite Klammerteil so an gegenüberliegenden Seiten der Strukturkomponenten angebracht werden können, dass diese an gegenüberliegenden Seiten formschlüssig anliegen und beispielsweise über einen entsprechende Überstand an der Außenkante der Strukturkomponenten miteinander verbunden werden können. Dies ist damit gemeint, dass der erste Klammerteil und der zweite Klammerteil die Strukturkomponenten zumindest abschnittsweise umgibt und in diese eingreift.

Am Beispiel eines Stringers als Strukturkomponente, welcher eine langgestreckte Komponente ist, die entlang einer Längsachse eines Flugzeugs verläuft und dessen Querschnitt im Wesentlichen hutförmig ausgestaltet ist, kann die Krone des entsprechenden Hutprofils an einer Innenwand einer Flugzeughülle anliegen und daran befestigt sein. In Umlaufrichtung des Flugzeugrumpfs im Querschnitt stehen dann die entsprechend gebogenen Krempen des Hutprofils ab. Der Klemmhalter kann beispielsweise an diesen Krempen des Hutprofils befestigt werden, indem das erste Klammerteil an der der Flugzeughülle zugewandten Seite der entsprechenden Krempe des Stringers formschlüssig anliegt. Das zweite Klammerteil liegt dann an der der Flugzeughülle abgewandten Seite der entsprechenden Krempe formschlüssig an. Dabei ist zu beachten, dass diese Reihenfolge beispielhaft ist. Die Positionen bzw. Rollen des ersten Klammerteils und des zweiten Klammerteils können auch vertauscht sein. Das erste Klammerteil und das zweite Klammerteil klammern also sozusagen die jeweilige Krempe zwischen sich ein und stehen am Rand der Krempe ab. Die am Rand der Krempe abstehenden Teile der Klammerteile können dann in jeder geeigneten Art und Weise miteinander verbunden werden, beispielsweise mit einer Klemmverschraubung, wie weiter unten beschrieben, oder aber auch mit einer entsprechend starken Feder, auch wenn eine Federklemmung aufgrund der Ermüdung der Feder nicht die bevorzugte Ausgestaltung darstellt. Ferner ist denkbar, dass die entsprechenden überstehenden Teile des ersten Klammerteils und des zweiten Klammerteils ein Durchgangsloch aufweisen, durch welche jede geeignete Art von Verbindungselement, wie beispielsweise Schrauben, Nieten, etc. eingeführt und befestigt werden kann.

Insgesamt verhindert der offenbarte Klemmhalter die Notwendigkeit von Nietbohrung (oder anderen Bohrung) in der Strukturkomponente selbst. Zudem kann der Klemmhalter flexibel an jeder Stelle der Strukturkomponenten angebracht werden, ohne auf vorgeplante Befestigungspositionen festgelegt zu sein.

Der Bauteil-Befestigungsabschnitt kann jeder geeignete Befestigungsabschnitt sein, der eine Befestigung von gewünschten Bauteilen an dem Klammerhalter ermöglicht. Beispielsweise kann der Bauteil-Befestigungsabschnitt ein Durchgangsloch, eine Lasche, eine Klammer, oder jeder andere geeignete Befestigungsabschnitt für die beabsichtigte Verwendung sein. Zudem ist zu beachten, dass der Bauteil-Befestigungsabschnitt nicht zwangsläufig an dem ersten Klammerteil vorgesehen sein muss, sondern auch an dem zweiten Klammerteil vorgesehen sein kann. Zudem ist auch denkbar, an beiden Klammerteilen (identische oder unterschiedliche) Bauteil-Befestigungsabschnitte vorzusehen.

Gemäß einer Ausführungsform ist der Bauteil-Befestigungsabschnitt konfiguriert, ein Kabel als Bauteil aufzunehmen und zu halten.

Dazu kann der Bauteil-Befestigungsabschnitt beispielsweise ein Durchgangsloch sein, welches sich durch mindestens eines des ersten und des zweiten Klammerteils erstreckt. Durch ein solche Durchgangsloch kann dann das Kabel geführt werden und damit mit dem Klemmhalter befestigt werden. Es ist aber auch denkbar, dass der Bauteil-Befestigungsabschnitt als Klammer, Nut, oder ähnliches ausgestaltet ist.

Gemäß einer weiteren Ausführungsform ist der Bauteil-Befestigungsabschnitt ein Durchgangsloch in dem ersten Klammerteil, welches konfiguriert ist, ein längliches Bauteil aufzunehmen.

Ein solches längliches Bauteil kann beispielsweise ein Kabel, eine Rohrleitung, ein Kanal oder ein ähnliches längliches Bauteil sein, welches durch ein entsprechendes Durchgangsloch eingeführt werden kann. Beispielsweise ist denkbar, an jedem aufeinanderfolgenden Stringer eines Flugzeugs an der gleichen Umfangsposition einen Klemmhalter anzubringen, so dass die entsprechenden Durchgangslöcher fluchtend zueinander ausgerichtet sind. Durch die fluchtenden Durchgangslöcher können dann beispielsweise Kabel entlang der Längsachse eines Flugzeugs verlegt werden.

Bevorzugt ist beispielsweise bei einem Klemmhalter für einen Stringer das Durchgangsloch so in dem ersten Klammerteil angeordnet, dass es sich in dem durch eine Krempe des von dem Stringer im Querschnitt gebildeten Hutprofils erstreckt. Dadurch kann beispielsweise ein Kabel, eine Leitung oder ein Kanal platzsparend in der Krempe des Stringers entlang der Flugzeuglängsachse verlegt werden.

Gemäß einer weiteren Ausführungsform erstreckt das Durchgangsloch sich entlang einer Längsrichtung der Strukturkomponente, wenn der Klemmhalter an der Strukturkomponente angebracht ist.

Insbesondere kann das Durchgangsloch parallel zu der Längsachse der Strukturkomponente verlaufen, beispielsweise bei einem Stringer innerhalb einem von dem Hutprofil (im Querschnitt) gebildeten Kanal, der entlang der Längsachse des Stringers verläuft. Dies ist allerdings nur ein Beispiel. Grundsätzlich kann der Klemmhalter auch für jede andere Strukturkomponente verwendet werden, die nicht zwangsläufig ein Hutprofil im Querschnitt aufweist. Das Durchgangsloch kann dann je nach Anforderung angeordnet und ausgerichtet sein.

Gemäß einer weiteren Ausführungsform sind der erste Klammerteil und der zweite Klammerteil mittels einer Klemmverschraubung miteinander verbindbar.

Eine solche Klemmverschraubung kann beispielsweise in dem von der Kante der Strukturkomponente abstehenden Abschnitt des ersten und des zweiten Klammerteils vorgenommen werden. Die Festigkeit einer solchen Klemmverschraubung kann gut an die jeweiligen Erfordernisse angepasst werden, beispielsweise mit einem Drehmomentschlüssel, und ermöglicht eine besonders einfache Montage des Klemmhalters. Beispielsweise kann eine Klemmverschraubung mit einer selbstsichernden Schraube, einer Schraube/Mutter-Kombination, oder auch mit erhältlichen Schrauben, die von einer Seite eingesetzt werden können, vorgenommen werden. Beispielsweise ist auch denkbar, von einer Seite eine Schraubenbuchse mit einem Innengewinde einzusetzen, welche beispielsweise an der der Einführstelle gegenüberliegenden Seite so ausgestaltet ist, dass diese sich aufspreizt, wenn eine Schraube mit Außengewinde in die Buchse eingesetzt wird, und so das erste Klammerteil und das zweite Klammerteil aneinanderpresst (ähnlich wie bei einem Niet). Da der Einführseite gegenüberliegende Ende kann dazu beispielsweise auch einen entprechende umlaufenden Flansch aufweisen, welcher dann gegen das zweite Klammerteil drückt, wenn eine Schraube mit Außengewinde von der Seite des ersten Klammerteils aus (welche in diesem Beispiel der Einführseite entspricht) eingeführt wird. Dadurch kann eine Klemmverschraubung von nur einer Seite erreicht werden.

Grundsätzlich ist dies aber nur ein Beispiel und es kann jede andere geeignete Art der Klemmverschraubung verwendet werden.

Gemäß einer weiteren Ausführungsform weist der erste Klammerteil und/oder der zweite Klammerteil eine Haftbeschichtung an einer der im eingebauten Zustand der Strukturkomponente zugewandten Seite auf.

Die Haftbeschichtung ist dabei allgemein als rutschhemmende Beschichtung zu verstehen, welche beispielsweise ein Verrutschen des Klemmhalters entlang einer Längsachse des Strukturbauteils oder allgemein weg von der beabsichtigten Position auf dem Strukturbauteil verhindert. Die Haftbeschichtung kann dabei beispielsweise eine adhäsive Beschichtung, wie z.B. eine entsprechende Klebstoffbeschichtung, aber beispielsweise auch ein dünnes Gummipolster oder ähnliches sein, welches eine gewisse Resistenz gegen Verschiebungen bereitstellt.

Gemäß einer weiteren Ausführungsform sind der erste Klammerteil und/oder der zweite Klammerteil ein im 3D-Druck gefertigtes Element.

Eine Herstellung im 3D-Druck ermöglicht insbesondere eine schnelle und kostengünstige Herstellung mit viel Gestaltungsspielraum bei der Ausformung des Klemmhalters. Zudem ist ein solcher Klemmhalter aus leichtgewichtigem Kunststoff gefertigt und trägt somit zur Gewichtsreduzierung bei. Eine solche Fertigung ist insbesondere bei Verwendungen, bei denen der Klemmhalter nicht viel Gewicht tragen muss, wie z.B. als Kabelhalter, vorteilhaft. Ferner kann eine Fertigung im 3D-Druck insbesondere bei Sonderformen oder bei Kleinserien oder Einzelteilen, bei welchen eine Fertigung beispielsweise in formgebenden oder anderen Verfahren unwirtschaftlich ist, von Vorteil sein, da durch den 3D-Druck aufwändige Fertigungsanlagen nicht notwendig sind.

Gemäß einer weiteren Ausführungsform sind der erste Klammerteil und/oder der zweite Klammerteil mit einem formgebenden Verfahren gefertigt.

Beispielsweise können solche formgebenden Verfahren Spritzgussverfahren (oder auch andere Gussverfahren) umfassen, wobei ein aufgeschmolzenes Material in einen formgebenden Hohlraum (Kavität) eines Werkzeugs eingespritzt, unter Druck verdichtet sowie vernetzt oder zur Abkühlung gebracht und dann als Formteil ausgeworfen wird.

Dabei sind bei solchen Spritzgussverfahren beispielsweise Kunststoff-Spritzgussverfahren denkbar, bei welchen das aufgeschmolzene Material ein aufgeschmolzener Kunststoff ist.

Insbesondere bei Anwendungen, in denen eine erhöhte Festigkeit des Klemmhalters gewünscht ist, sind aber auch andere Spritzgussverfahren, wie beispielsweise Metallpulverspritzguss (Engl.: Metal Injection Molding, MIM) denkbar, wobei ein feines Metallpulver mit einem Binder vermischt und dann in üblicher Weise im Spritzguss in Form gespritzt wird. Anschließend kann der Binder (beispielsweise in einem Aceton-Bad) aus den gespritzten Teilen wieder entfernt werden und die gespritzten Teile anschließend bei hoher Temperatur in einem Ofen gesintert werden. Als Ergebnis ergibt sich somit ein rein metallisches Enderzeugnis (in diesem Fall die Klammerteile), das die mechanischen Vorteile gesinterter Bauteile mit der großen Formgebungsvielfalt des Spritzgießens verbindet. Eine weitere Alternative sind beispielsweise auch Keramikpulverspritzguss (Engl.: Ceramic Injection Molding, CIM), das prozesstechnisch dem MIM-Verfahren ähnelt, jedoch auf die Fertigung von keramischen Bauteilen hin optimiert ist.

Grundsätzlich können die Klammerteile allerdings auch mit jedem anderen geeigneten Urformverfahren oder beispielsweise auch im Strangpressverfahren oder mit jedem anderen geeigneten Verfahren gefertigt werden.

Formgebenden Verfahren wie Spritzgießen (z.B. Kunststoff-Spritzguss, MIM, CIM und andere geeignete Verfahren) sind insbesondere bei der Serienproduktion von großen Mengen vorteilhaft.

Gemäß einer weiteren Ausführungsform ist der Klemmhalter ausgestaltet ist, an einem Stringer oder einem Spant eines Flugzeugs angebracht zu werden.

Insbesondere kann der Klemmhalter, bzw. dessen erster und zweiter Klammerteil (und dort deren Innenseiten) als Negativform der Kontur eines solchen Stringers oder Spants ausgestaltet. Dadurch können in einfacher und flexibler Weise Bauteile wie beispielsweise Kabel, Leitungen, oder Schächte, entlang der Flugzeuglängsachse verlegt und an der Primärstruktur des Flugzeugs befestigt werden.

Gemäß einem zweiten Aspekt wird ein Fahrzeug offenbart. Das Fahrzeug umfasst eine Fahrzeughülle, mindestens eine Strukturkomponente, und mindestens einen Klemmhalter nach einem der vorstehenden Ansprüche. Der mindestens eine Klemmhalter ist an einer der mindestens einen Strukturkomponente angebracht und befestigt ein Bauteil an der Strukturkomponente.

Der Klemmhalter kann gemäß irgendeiner der zuvor beschriebenen Ausführungsformen ausgestaltet sein. Das Fahrzeug kann beispielsweise ein Flugzeug, eine Straßenbahn, ein Bus, ein Zug, ein Kraftfahrzeug, oder jedes andere Fahrzeug sein.

Gemäß einer Ausführungsform ist das Fahrzeug ein Flugzeug. Die mindestens eine Strukturkomponente ist ein Stringer oder ein Spant des Flugzeugs.

Zusammenfassend wird durch den offenbarten Klemmhalter eine einfache Möglichkeit geschaffen, Bauteile wie insbesondere Kabel, Leitungen, Schächte und ähnliches, aber auch jedes andere geeignete Bauteil, unmittelbar an einer Strukturkomponenten eines Fahrzeugs zu befestigen. Der Klemmhalter erfordert keinerlei Bohrungen in der Strukturkomponente und vermeidet somit Schwächungen der strukturellen Integrität der Primärstruktur. Zudem können durch das verwendete Befestigungsprinzip die Montagezeiten deutlich reduziert werden, insbesondere, da auf ein aufwändiges vorsehen von Bohrlöcher und Annieten von Halterungen verzichtet werden kann. Nicht zuletzt wird auch die Arbeitssicherheit erhöht, da Monteure weniger lang auf Leitern stehen müssen und zudem dort weniger komplizierte Arbeitsschritte ausführen müssen.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Ansicht eines Klemmhalters am Beispiels eines Klemmhalters für einen Stringer in einem Flugzeug in einer ersten Perspektive
- **Fig. 2**: Eine schematische Ansicht des Klemmhalters aus Fig. 1 in einer zweiten Perspektive
- **Fig. 3**: Eine Querschnittsansicht des Klemmhalters der Fig. 1 und 2, welche an einem Stringer montiert ist.
- **Fig. 4**: Ein Flugzeug als beispielhaftes Fahrzeug, welches den hierin offenbarten Klemmhalter an einer Strukturkomponente umfasst.

### DETAILLIERTE BESCHREIBUNG

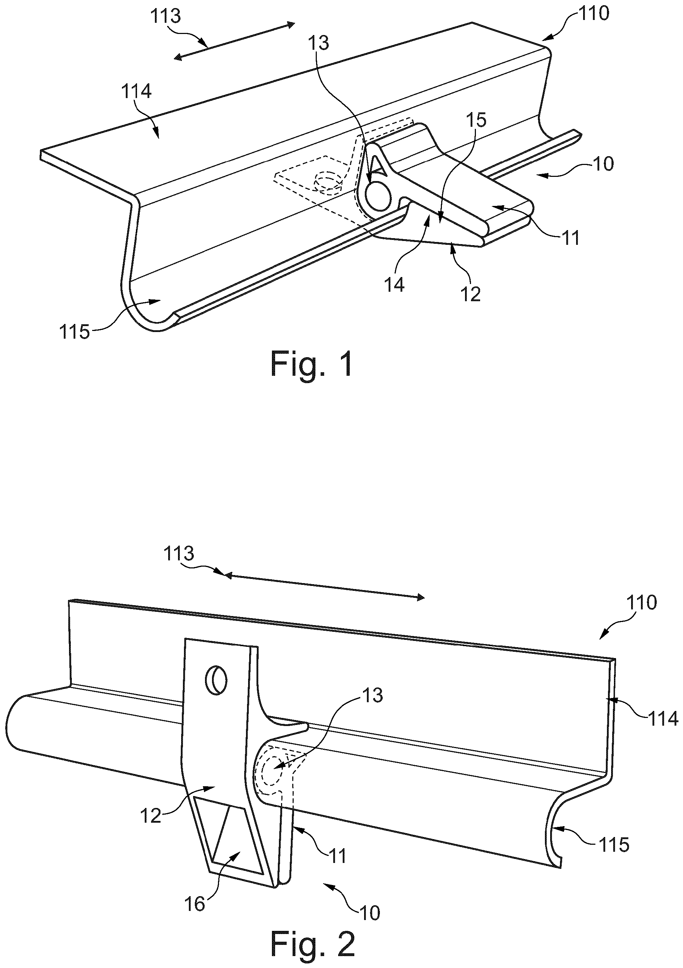

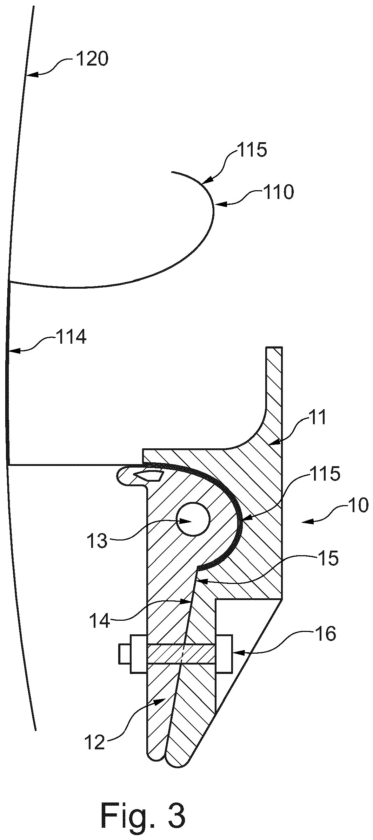

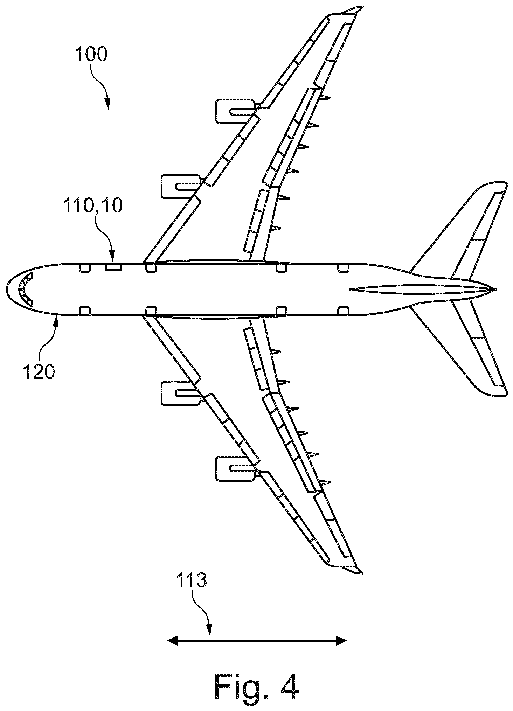

Die Fig. 1 bis 3 zeigen einen beispielhaften Klemmhalter 10, welcher an einer Strukturkomponente 110 eines Fahrzeugs 100 (nicht dargestellt, siehe Fig. 4) angebracht ist, in verschiedenen Ansichten. Die Fig. 1 und 2 zeigen perspektivischen Ansichten von vorne und von hinten. Die Fig. 3 zeigt eine Querschnittsansicht des Klemmhalters 10. Im Folgenden werden die Fig. 1 bis 3 zusammen beschrieben, da diese die gleiche Konfiguration nur in unterschiedlichen Ansichten zeigen.

In den Fig. 1 bis 3 ist der Klemmhalter 10 an einem Stringer 110 (als Strukturkomponente 110) eines Flugzeugs 100 (als Fahrzeug 100) angebracht. Der Stringer 110 weist einen hutförmigen Querschnitt mit einer Krone 114 und zwei Krempen 115 auf (nur eine davon in den Fig. 1 und 2 dargestellt). In Fig. 3 ist der Stringer 110 in Kontakt mit einer Flugzeughülle 120.

Der Klemmhalter 10 weist einen ersten Klammerteil 11 und einen zweiten Klammerteil 12 auf. Der erste Klammerteil 11 weist eine Innenseite 14 auf und der zweite Klammerteil 12 weist eine Innenseite 15 auf. Die Innenseiten 14, 15 sind jeweils korrespondierend, insbesondere formschlüssig, mit einer entsprechenden Seite einer der Krempen 115, an welcher der Klammerhalter 10 angebracht ist, ausgeformt. Mit anderen Worten: Die Innenseite 14 des ersten Klammerteils 11 ist formschlüssig mit einer der Flugzeugkabine zugewandten Seite der entsprechenden Krempe 115 ausgeformt und die Innenseite 15 des zweiten Klammerteils 12 ist formschlüssig mit einer der Flugzeugkabine abgewandten und der Flugzeughülle zugewandten Seite der entsprechenden Krempe 115 ausgeformt.

Sowohl das erste Klammerteil 11 als auch das zweite Klammerteil 12 weisen zudem einen Überstand auf (in Fig. 3 der Abschnitt, welcher nach unten von der Krempe 115 absteht). Die Überstände des ersten Klammerteils 11 und des zweiten Klammerteils 12 sind ebenfalls formschlüssig zueinander ausgestaltet. Eine Klemmverschraubung 16, in dem dargestellten Beispiel als Schraube und Mutter ausgestaltet, klemmt das erste Klammerteil 11 und das zweite Klammerteil 12 aneinander, so dass das der Klemmhalter 10 zwischen dem ersten Klammerteil 11 und dem zweiten Klammerteil 12 den Stringer 110 abschnittsweise (d.h. an der Krempe 115) umgibt und in den Stringer 110 eingreift. Die Klemmverschraubung 16 bietet somit eine gute Befestigung des Klemmhalters 10 an dem Stringer 110. Es sollte beachtet werden, dass die Klemmverschraubung 16 auch in jeder anderen geeigneten Weise ausgestaltet sein kann, wie hierin weiter oben beschrieben, oder dass das erste Klammerteil 11 und das zweite Klammerteil 12 auch in einer anderen geeigneten Weise miteinander verbunden sein können, so dass der Klemmhalter 10 in den Stringer 110 (oder allgemein die Strukturkomponente 110; diese kann beispielsweise auch ein Spant oder eine Strukturkomponente eines anderen Fahrzeugs als eines Flugzeugs 100 sein) eingreift. Da sowohl das erste Klammerteil 11 als auch das zweite Klammerteil formschlüssig sowohl zu dem Stringer 110 als auch zueinander ausgestaltet sind, kann der Klemmhalter 10 sich gegenüber dem Stringer auch nicht verdrehen.

Der Klemmhalter 10 weist zudem einen Bauteil-Befestigungsabschnitt 13 auf, welcher in dem dargestellten Beispiels als Durchgangsloch 13 ausgestaltet ist, welches in dem durch die Krempe 115 gebildeten Kanal entlang der Längsachse 113 der Strukturkomponente 10 verläuft, die in dem dargestellten Beispiel (da die Strukturkomponenten 110 ein Stringer 110 ist) mit einer Längsachse 113 des Flugzeugs (siehe Fig. 4) zusammenfällt. Durch das Durchgangsloch 13 kann beispielsweise ein Kabel oder eine Leitung aufgenommen werden, so dass der Klemmhalter 10 beispielsweise als Kabelhalter zum Anbringen von Kabeln an die Primärstruktur des Flugzeugs dient.

Es sollte beachtet werden, dass das Durchgangsloch 13 nur ein Beispiel eines Bauteil-Befestigungsabschnitts 13 ist. Der Bauteil-Befestigungsabschnitt 13 kann grundsätzlich auch in jeder anderen geeigneten Art und Weise ausgestaltet sein, wie hierin weiter oben bereits beschrieben. Zudem kann der Bauteil-Befestigungsabschnitt 13 auch an dem zweiten Klammerteil 12 vorgesehen sein oder sowohl der erster Klammerteil 11 als auch der zweite Klammerteil 12 können einen entsprechenden Bauteil-Befestigungsabschnitt aufweisen. Sämtliche Kombination, auch mit mehr als einem Bauteil-Befestigungsabschnitt 13 an einem der Klammerteile 11, 12 sind möglich, solange die Form der Klammerteile 11, 12 entsprechend angepasst ist.

Vorzugsweise ist der Klammerhalter 10 ein im 3D-Druck gewonnenes Teil oder ein anderweitig gefertigtes Kunststoffteil. Dadurch kann das Gewicht des Flugzeugs 100 (oder allgemein eines Fahrzeugs) reduziert werden. Allerdings kann der Klemmhalter 10 auch in jeder anderen geeigneten Weise, z.B. im Spritzguss, als Sinterteil, als geschmiedetes Teil, als Formgussteil, oder in jeder anderen Art und Weise gefertigt sein.

Der offenbarte Klemmhalter 10 verzichtet auf die Notwendigkeit von Niet-Löchern in den Strukturkomponenten 110, wie dies bei im Stand der Technik üblichen Niet-Haltern der Fall ist, und reduziert dadurch zudem die Montagezeiten.

Fig. 4 zeigt beispielhaft ein Flugzeug 100 als Fahrzeug 100, in welchem mehrere Stringer und Spanten verlaufen oder allgemein Strukturkomponenten 110 verlaufen (in Fig. 4 nicht dargestellt). Das Flugzeug 100 weist eine Flugzeughülle 120 auf. An zumindest einer der Strukturkomponenten 110 ist ein oben beschriebener Klemmhalter 10 (hochschematisch als Box angedeutet) vorhanden, beispielsweise um Kabel oder andere Bauteile aufzunehmen und an die Primärstruktur des Flugzeugs 100 zu binden.

Der Klemmhalter der Fig. 1 bis 3 kann in jeder der hierin weiter oben beschriebenen Art und Weise ausgestaltet sein. Außerdem kann der Klemmhalter 10 auch für Strukturkomponenten in anderen Fahrzeugtypen oder sogar in Häusern ausgestaltet sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 10: Klemmhalter
- 11: erster Klammerteil
- 12: zweiter Klammerteil
- 13: Bauteil-Befestigungsabschnitt, z.B. Durchgangsloch
- 14: Innenseite des ersten Klammerteils
- 15: Innenseite des zweiten Klammerteils
- 16: Klemmverschraubung

- 100: Fahrzeug
- 110: Strukturkomponente, z.B. Stringer oder Spant
- 111: erste Seite der Strukturkomponente
- 112: zweite Seite der Strukturkomponente
- 113: Längsrichtung der Strukturkomponente
- 114: Krone
- 115: Krempe
- 120: Fahrzeughülle, Flugzeughülle

## Patentansprüche

1. Klemmhalter (10) zum Befestigen von Bauteilen an einer Strukturkomponente (110) eines Fahrzeugs (100), der Klemmhalter (10) umfassend:
einen ersten Klammerteil (11);
einen zweiten Klammerteil (12); und
einen Bauteil-Befestigungsabschnitt (13);
wobei eine Innenseite (14) des ersten Klammerteils (11) zu einer Form einer ersten Seite (111) der Strukturkomponente (110) korrespondierend ausgestaltet ist;
wobei eine Innenseite (15) des zweiten Klammerteils (12) zu einer Form einer zweiten Seite (112) der Strukturkomponente (110), welche der ersten Seite (111) gegenüber liegt, korrespondierend ausgestaltet ist;
wobei der erste Klammerteil (11) und der zweite Klammerteil (12) miteinander verbindbar sind, so dass der Klemmhalter (10) mit der Innenseite (14) des ersten Klammerteils (11) und mit der Innenseite (15) des zweiten Klammerteils (12) in die Strukturkomponente (110) eingreift, so dass der Klemmhalter (10) die Strukturkomponente (110) zumindest abschnittsweise umgibt, wenn der Klemmhalter (10) an der Strukturkomponenten (110) angebracht ist; und
wobei der Bauteil-Befestigungsabschnitt (13) an dem ersten Klammerteil (11) vorgesehen ist und ausgestaltet ist, ein Bauteil an dem Klemmhalter (10) zu befestigen.

2. Klemmhalter (10) nach Anspruch 1, wobei der Bauteil-Befestigungsabschnitt (13) konfiguriert ist, ein Kabel als Bauteil aufzunehmen und zu halten.

3. Klemmhalter (10) nach einem der vorstehenden Ansprüche, wobei der Bauteil-Befestigungsabschnitt (13) ein Durchgangsloch (13) in dem ersten Klammerteil (11) ist, welches konfiguriert ist, ein längliches Bauteil aufzunehmen.

4. Klemmhalter (10) nach Anspruch 3, wobei das Durchgangsloch (13) sich entlang einer Längsrichtung (113) der Strukturkomponente (110) erstreckt, wenn der Klemmhalter (10) an der Strukturkomponente (110) angebracht ist.

5. Klemmhalter (10) nach einem der vorstehenden Ansprüche, wobei der erste Klammerteil (11) und der zweite Klammerteil (12) mittels einer Klemmverschraubung miteinander verbindbar sind.

6. Klemmhalter (10) nach einem der vorstehenden Ansprüche, wobei der erste Klammerteil (11) und/oder der zweite Klammerteil (12) eine Haftbeschichtung an der im eingebauten Zustand der Strukturkomponente (110) zugewandten Innenseite (14, 15) aufweist.

7. Klemmhalter (10) nach einem der vorstehenden Ansprüche, wobei der erste Klammerteil (11) und/oder der zweite Klammerteil (12) ein im 3D-Druck gefertigtes Element ist.

8. Klemmhalter (10) nach einem der vorstehenden Ansprüche, wobei der Klemmhalter (10) ausgestaltet ist, an einem Stringer (110) oder einem Spant eines Flugzeugs (100) angebracht zu werden.

9. Fahrzeug (100), umfassend:
eine Fahrzeughülle (120);
mindestens eine Strukturkomponente (110); und
mindestens einen Klemmhalter (10) nach einem der vorstehenden Ansprüche;
wobei der mindestens eine Klemmhalter (10) an einer der mindestens einen Strukturkomponente (110) angebracht ist und ein Bauteil an der Strukturkomponente (110) befestigt.

10. Fahrzeug (100) nach Anspruch 9, wobei das Fahrzeug (100) ein Flugzeug (100) ist; und
wobei die mindestens eine Strukturkomponente (110) ein Stringer (110) oder ein Spant des Flugzeugs (100) ist.
